# EUROPEAN PATENT SPECIFICATION

(11) **EP 2 694 216 B1**
(45) Date of publication and mention of the grant of the patent: **24.02.2016**
(21) Application number: 11862849.4
(22) Date of filing: 05.04.2011
(51) Int. Cl.: A47J 42/38, A47J 31/42, A47J 42/40, A47J 42/44

(54) **APPARATUS FOR MEASUREMENT OF COFFEE**
VORRICHTUNG ZUR MESSUNG VON KAFFEE
APPAREIL PERMETTANT DE MESURER DU CAFÉ

(43) Date of publication of application: 12.02.2014
(73) Proprietor: Mazzer Luigi S.p.A., 30037 Scorze' (IT)
(72) Inventor: REGO, Francisco, Alfredo, Sun Valley, Idaho 83353-3000 (US)
(74) Representative: Piovesana, Paolo
(86) International application number: PCT/US2011/031260
(87) International publication number: WO 2012/138327

(56) References cited:
- WO-A1-01/23095
- WO-A1-2010/131242
- WO-A1-2010/131242
- US-A- 4 911 369
- US-A- 5 386 944
- US-A- 5 386 944
- US-A1- 2003 110 953
- US-A1- 2003 167 928
- US-A1- 2010 080 886

## Description

### FIELD OF THE INVENTION

The present invention relates to methods and devices for measuring ground coffee. More specifically, the present invention relates to methods and devices capable of precisely measuring the weight of ground coffee for use in preparing espresso or espresso-based beverages.

### BACKGROUND OF THE INVENTION

All publications herein are incorporated by reference to the same extent as if each individual publication or patent application was specifically and individually indicated to be incorporated by reference. The following description includes information that may be useful in understanding the present invention. It is not an admission that any of the information provided herein is prior art or relevant to the presently claimed invention, or that any publication specifically or implicitly referenced is prior art.

Espresso is a concentrated beverage brewed by forcing hot water under pressure through finely ground coffee. As a result of the pressurized brewing process, the flavors in a cup (or "shot") of espresso are very concentrated. For this reason, espresso is the base for other drinks, such as lattes, cappuccinos, and mochas. When baristas (e.g., expert coffee makers) prepare an espresso shot, they may follow a precise discipline that includes controlling many parameters, such as the quality of the coffee beans used, the quality of the roasting process; the time lapse between roasting and grinding, the time lapse between grinding and extraction of the espresso shot, and the like. Entire industries have developed to control the temperature, pressure, and flow-rate of the water used by espresso machines.

After the aforementioned parameters are controlled, a barista decides how much ground coffee, as measured by the mass of the ground coffee, to use when making an espresso shot. This amount of ground coffee is then placed into an espresso machine's portafilter. A portafilter generally includes a handle, a basket for holding the ground coffee, and may include one or more spouts. Some portafilters, generally referred to as bottomless or "naked" portafilters, may not include any spouts. Portafilters are usually made of metal and should be warmed before extracting espresso to prevent the hot water from being cooled too quickly as it passes through the portafilter. Portafilters are attachable to an espresso machine, and carry ground coffee within their baskets. They form a seal with an espresso machine's gasket, which allows for high-pressure hot water to be directed through the ground coffee to provide one or more shots of espresso.

At present, it is difficult to deliver a specified mass of ground coffee to an espresso machine's portafilter. One method that could be utilized involves the use of a conventional scale that measures the weight of the ground coffee (weight is an accurate representation of mass, because "weight" is defined as "mass multiplied by the acceleration caused by gravity"). For this method, a temporary weighing container could be placed on the scale and a quantity of ground coffee placed into the temporary container. The weight of the container may be subtracted out or otherwise accounted for. A utensil such as a spoon may then be used to add or remove ground coffee until the desired weight of coffee is in the container. Once the desired weight has been achieved, the ground coffee may then be transferred from the temporary weighing container into a portafilter.

As can be appreciated, it would be difficult to transfer the ground coffee from the weighing container to the portafilter without spilling any ground coffee or leaving any coffee behind in the weighing container, which would cause the amount of ground coffee that ultimately ends up in the portafilter to be different than the desired weight. This method would also be time consuming, which may be disadvantageous in production environments (e.g., coffee shops) where the quick preparation of espresso is important. Further, it may be difficult for baristas to maintain the temperature of the portafilter due to the length of time required to measure the coffee and transport it between various containers.

For these and other reasons, most baristas do not use this method but instead rely on other techniques to roughly estimate the amount of ground coffee used when preparing an espresso shot. By estimating the amount of ground coffee rather than precisely measuring it, there is significant variability in the amount of ground coffee used for each espresso shot. This undesirable inconsistency results in espresso shots that have unpredictable flavors and other detrimental characteristics.

Recognizing the need to use a precise amount of ground coffee mass to make an espresso shot, manufacturers of coffee grinding devices ("coffee grinders") have

developed methods that attempt to deliver a specified amount of coffee mass to a portafilter. Some coffee grinders use volumetric measurements. Others employ timers that allow the coffee grinder to run for a specified period of time that supposedly corresponds to a specified amount of ground coffee mass. Unfortunately, both measurements (the measurement of the volume of ground coffee, as well as the measurement of the dispensing time of ground coffee) can be inaccurate measurements of the mass of coffee involved in the process. Both methods are, furthermore, susceptible to changing conditions such as temperature, humidity, the roast of the coffee beans, or the age of the coffee beans. The effect of the shortcomings of these methods is the production of shots of espresso that are lacking in flavor, quality, and consistency.

Previous attempts at providing a weight-controlled grinder, or apparatus for dispensing of ground material into a grounds holder or funnel, include: Knepler, et al., US. Patent 5,386,944; Mazzer, US Publication 2003/0110953 A1; Food Equipment Technologies, WO 01/23095 A1; Wagensberg, WO 10/131242; and Bunn, US Patent 4,911,369.

### SUMMARY OF THE INVENTION

In an embodiment, the invention includes a coffee grinding and weighing apparatus comprising:
a coffee grinder comprising:
   a base structure;
   a coffee grinding mechanism disposed within the base structure that is operative to grind whole coffee beans into ground coffee;
   an output portion operatively associated with the coffee grinding mechanism that includes an outlet configured to dispense ground coffee therefrom; and the coffee grinding and weighting apparatus further comprising: a weight measurement device operably coupled to the base structure and positioned below the outlet,
   the weight measurement device being configured to support a_portafilter having a basket comprising a spout depending from the basket, and an elongated handle; and
   the weight measurement device comprising a portafilter platform having a basket support portion maintaining the basket of the portafilter directly below the outlet for filling the basket with ground coffee, the basket support portion comprising a hollow interior region for receiving said spout of the basket, and the portafilter platform further having a handle support portion;
   the coffee grinding and weighing apparatus being characterized in that the handle support portion can be selectively adjustable to permit use with a variety of types of portafilters .

The portafilter platform may be operative to maintain the basket of the portafilter in a substantially horizontal orientation. The coffee grinding apparatus may include a user interface operatively coupled to the weight measurement device that includes a display configured to display a net weight of ground coffee measured by the weight measurement device. The coffee grinding apparatus may further include a controller operatively coupled to the weight measurement device and the coffee grinding mechanism that is operative to selectively control the operation of the coffee grinding mechanism dependent on signals received from the weight measurement device. The user interface may be operatively coupled to the controller and permits a user to enter a desired weight of ground coffee to be stored in a memory of the controller. The controller may be operative to continuously measure the net weight of ground coffee as the coffee grinding mechanism is operating, to compare the net weight to the desired weight, and to stop the operation of the coffee grinding mechanism when the net weight reaches the desired weight.

### BRIEF DESCRIPTION OF THE FIGURES

Exemplary embodiments are illustrated in referenced figures. It is intended that the embodiments and figures disclosed herein are to be considered illustrative rather than restrictive.
Figure 1 A depicts a perspective view of a coffee grinding apparatus in accordance with an embodiment of the present invention.
Figure 1 B depicts a perspective view of the coffee grinding apparatus shown in Figure 1A with a portafilter positioned on a portafilter platform of the coffee grinding apparatus.
Figure 2A depicts a left-side elevational view of a portion of the coffee grinding apparatus as shown in Figure 1A.
Figure 2B depicts a left-side elevational view of a portion of the coffee grinding apparatus as shown in Figure 1 B.
Figure 3A depicts a front elevational view of a portion of the coffee grinding apparatus as shown in Figure 1 A.
Figure 3B depicts a front elevational view of a portion of the coffee grinding apparatus as shown in Figure 1 B.
Figure 4 depicts a functional block diagram of an exemplary coffee grinding apparatus in accordance with an embodiment of the present invention.
Figure 5 depicts a flow diagram for a method of operation for an exemplary coffee grinding apparatus in accordance with an embodiment of the present invention.
Figure 6A depicts a perspective view of a ground coffee measurement apparatus in accordance with an embodiment of the disclosure.
Figure 6B depicts a perspective view of the ground coffee measurement apparatus shown in Figure 6A with a portafilter positioned on a portafilter platform.
Figure 7A depicts a left-side elevational view of a portion of the ground coffee measurement apparatus as shown in Figure 6A.
Figure 7B depicts a left-side elevational view of a portion of the ground coffee measurement apparatus as shown in Figure 6B.
Figure 8A depicts a front elevational view of a portion of the ground coffee measurement apparatus as shown in Figure 6A.
Figure 8B depicts a front elevational view of a portion of the ground coffee measurement apparatus as shown in Figure 6B.
Figure 9A depicts a left-side elevational view of another embodiment of a ground coffee measurement apparatus that includes an adjustable portafilter platform and an adjustable portafilter support handle.
Figure 9B depicts a left-side elevational view of the ground coffee measurement apparatus shown in Figure 9A when the portafilter platform is adjusted to be positioned at a greater height than that shown in Figure 9A.

### DETAILED DESCRIPTION OF THE INVENTION

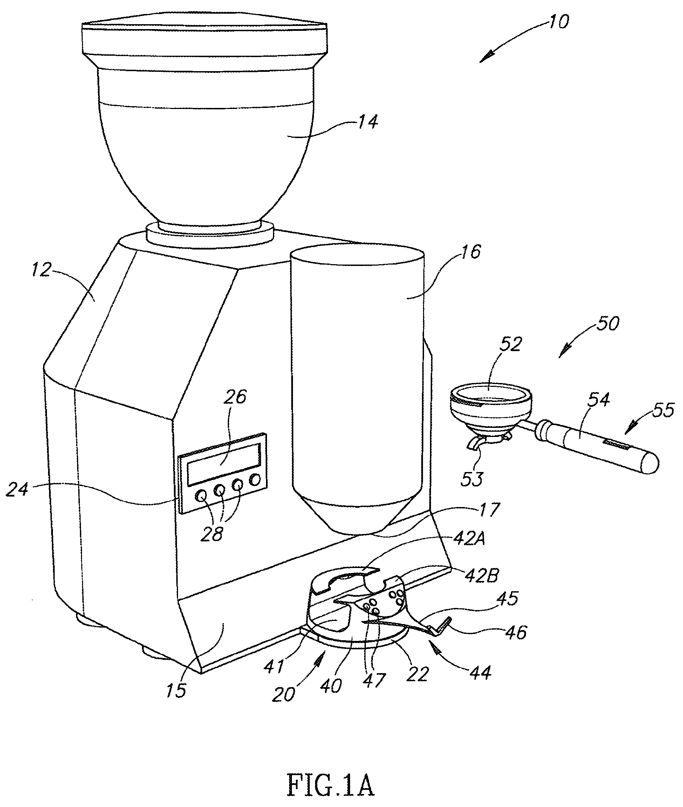

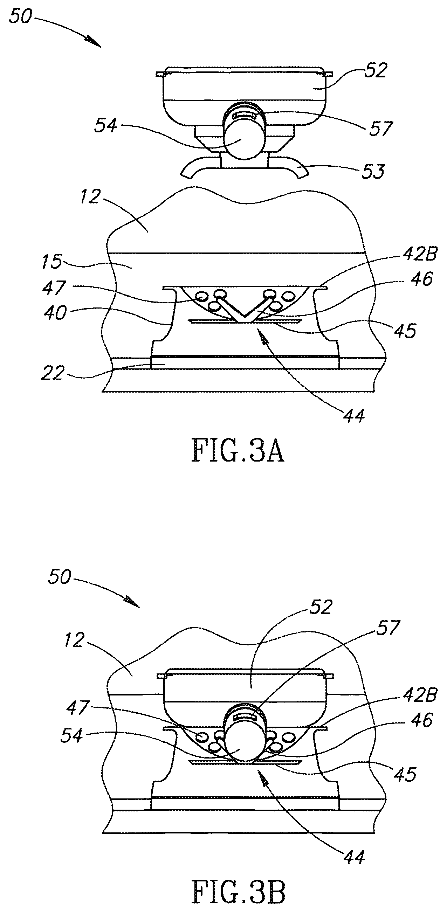

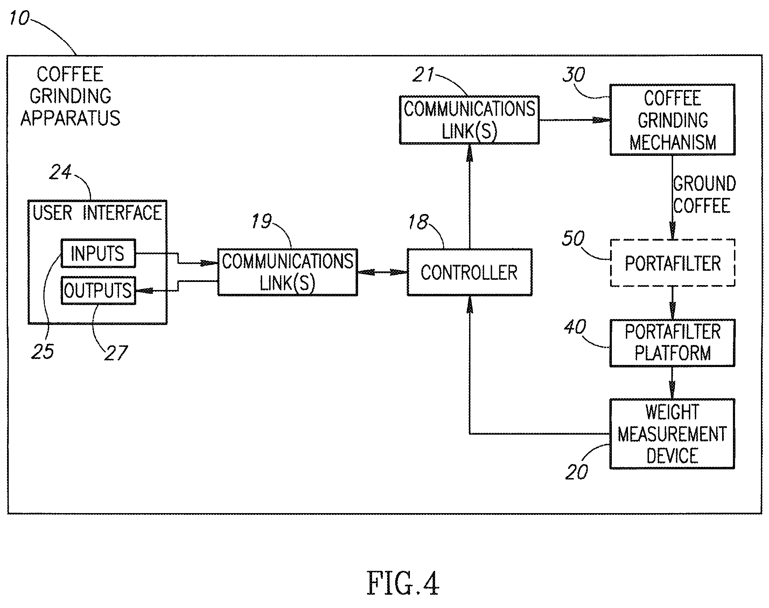

Referring now to the drawings in which like parts are designated by like reference characters throughout the several views, Figures 1 A-B, 2A-B, and 3A-B depict a coffee grinding apparatus 10 in accordance with an embodiment of the present invention, wherein the handle support portion of the portafilter platform can be adapted to be selectively adjustable to permit use with a variety of types of portafilters. The apparatus 10 includes a base structure (or body") 12 having a coffee grinding mechanism 30 (see Figure 4) disposed therein that is operative to grind whole coffee beans into ground coffee. The coffee grinding mechanism 30 may be any suitable coffee grinding mechanism known in the art. The apparatus 10 includes an input portion or hopper 14 configured to store whole coffee beans and to supply the beans to the grinding mechanism 30. The apparatus 10 also includes an output portion 16 that is operatively associated with the grinding mechanism 30. The output portion 16 may be of any suitable shape, and includes a downwardly directed opening or outlet 17. In operation, the coffee grinding mechanism 30 receives whole coffee beans from the input portion 14, grinds the coffee beans into ground coffee, and the ground coffee is then dispensed out of the outlet 17 of the output portion 16.

The coffee grinding apparatus 10 also includes a weight measurement device 20 disposed below the output portion 16. As described in further detail below, the weight measurement device 20 enables the coffee grinding apparatus 10 to dispense a precise mass of ground coffee, as measured by its weight, directly into a portafilter 50 positioned on the weight measurement device.

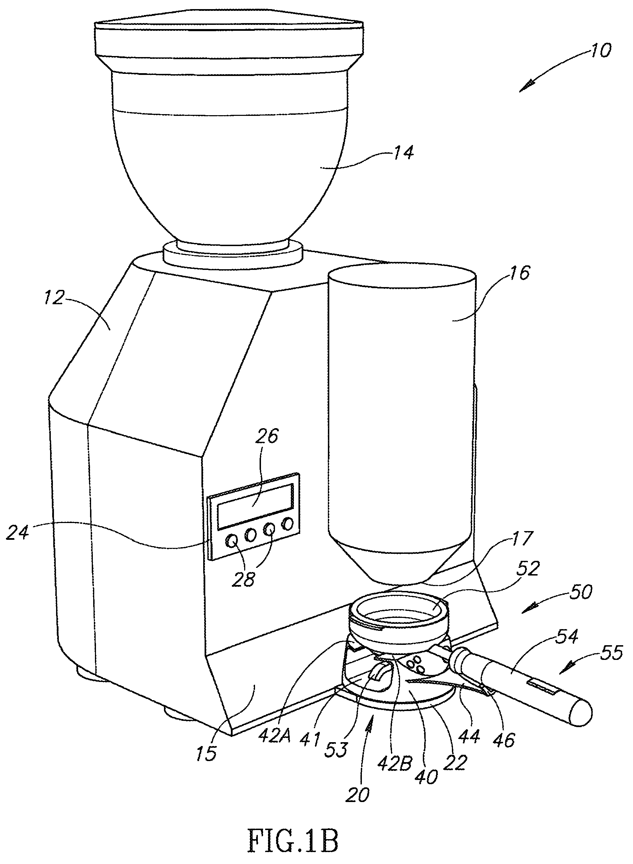

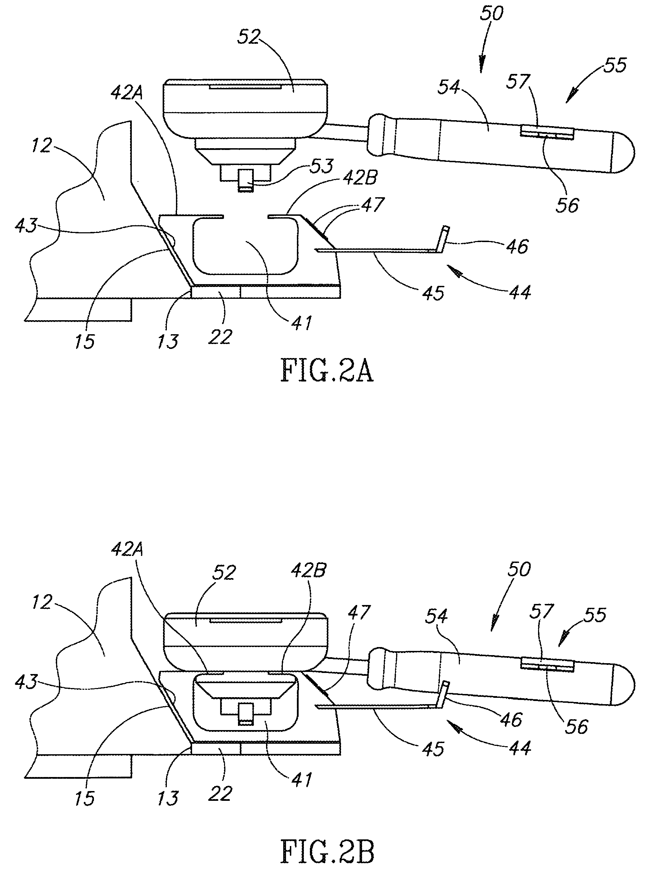

The weight measurement device 20 includes a portafilter platform 40 fixedly coupled to a base portion 22 of the weight measurement device. As can be seen in Figures 2A and 2B, the base portion 22 of the weight measurement device 20 is fixedly coupled to a portion 13 of a lower front portion 15 of the base structure 12. The portafilter platform 40 comprises a rear raised basket support portion 42A and a front raised basket support portion 42B for supporting a basket 52 of the portafilter 50, and a handle support portion 44 for supporting a handle 54 of the portafilter 50. The handle support portion 44 comprises an elongated beam portion 45 and a handle receiving portion 46. As shown in Figure 1B, the portafilter platform 40 is configured to support the portafilter 50 in a manner that positions the basket 52 of the portafilter directly below the outlet 17 of the output portion 16 so that ground coffee can be dispensed directly into the basket.

Further, the portafilter platform 40 is configured to maintain the basket portion 52 of the portafilter 50 in a substantially horizontal orientation to reduced the likelihood that ground coffee will spill out of the basket 52 as the ground coffee is dispensed therein.

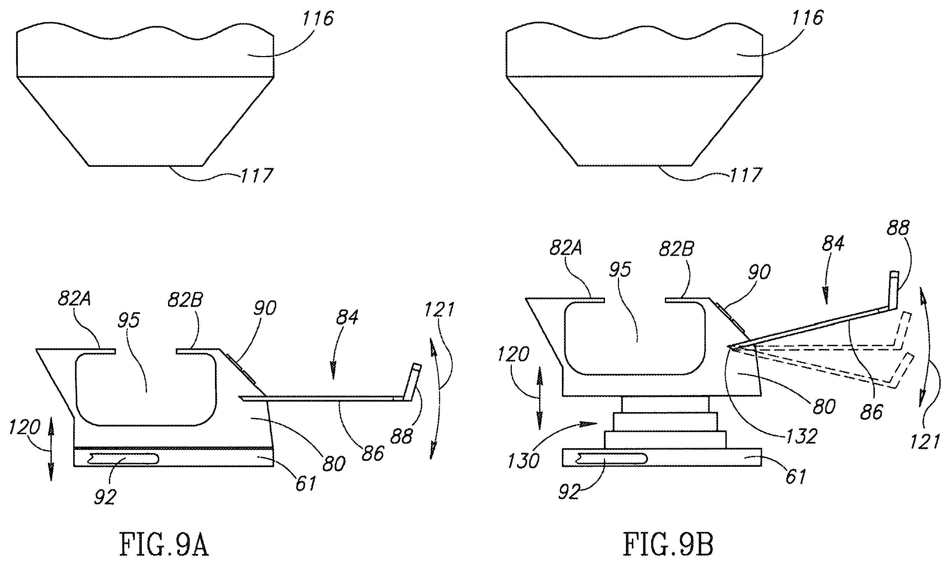

As discussed below with reference to Figures 9A and 9B, the portafilter platform 40 may be adjustable in one or more ways so that it may be used with various types of portafilters (e.g., portafilters for different types of espresso machines) and/or various types of coffee grinding devices. As can be appreciated, the portafilter platform 40 maintains the positioning of the portafilter 50 without user intervention. In other words, the portafilter platform 40 permits "hands free" operation by a user.

The raised basket support portions 42A and 42B are configured to form a hollow interior region 41 (see Figures 2A and 2B) that are operative to receive a spout portion 53 of the portafilter 50. As may best be viewed in Figure 2A, the raised basket support portions 42A and 42B include a gap between them so that the portafilter 50 may be positioned on the portafilter platform 40 by horizontally advancing the portafilter toward the portafilter platform from either the left side or the right side. In this regard, the spout portion 53 of the portafilter passes through one of the gaps formed by the basket support portions 42A and 42B and into the hollow interior region 41. As shown best in Figures 2A and 2B, the rear raised basket support portion 42A includes an angled outer surface 43 adjacent to the angled front portion 15 of the base structure 12. These features permit the portafilter basket 52 to be placed on the portafilter platform 40 at a position that is directly below the outlet 17 of the output portion 16 of the coffee grinding apparatus 10. Further, the raised basket support portions 42A and 42B may be configured to permit a slight amount of horizontal movement of the portafilter 50 when it is supported by the portafilter platform 40. By allowing horizontal movement of the portafilter 50, a user may move the portafilter 50 as it is being filled with ground coffee so that the ground coffee evenly fills the portafilter basket 52.

The weight measurement device 20 further includes a user interface 24 having a display 26 and a plurality of keys or buttons 28 positioned thereon. The user interface 24 may include any combination of inputs, including buttons, keypads, a touch screen, and the like. Further, the user interface 24 may include other outputs instead of or in addition to the display 26, such as one or more speakers for generating audio signals.

Additionally, although the user interface 24 is positioned on a front portion of the base structure 12 in the illustrated embodiment, it should be appreciated that the user interface may be positioned at one or more various other locations on the base structure 12, on the weight measurement device 20, at other portions of the coffee grinding apparatus 10, or may even be configured to be a standalone device (e.g., positioned on a counter space or on a wall).

In the illustrated embodiment, another user interface 55 is provided that is configured for fixed or removable attachment to the handle 54 of the portafilter. The user interface 55 includes a display 57 and a plurality of buttons 56 (see Figure 2B). The user interface 55 may be configured for wired or wireless communication with the coffee grinding apparatus 10. Further, the user interface 55 may be provided in addition to or instead of the user interface 24 provided on the coffee grinding apparatus 10. As further described below, the display 57 and the buttons 56 of the user interface 55 may permit a user to interact with and receive information from the coffee grinding apparatus 10.

The coffee grinding apparatus 10 may also include one or more input buttons 47 positioned on the portafilter platform 40. These buttons may perform the same functions or additional functions to the buttons described above. As can be appreciated, the buttons 47 may be positioned at a variety of locations on the portafilter platform 40 as desired.

As shown, the overall size and footprint of the weight measurement device 20 is relatively small compared to the coffee grinding apparatus 10. For use in space- restricted applications (e.g., coffee shops having limited counter space), the size and footprint of the weight measurement device 20 may be configured to be even smaller than shown in the Figures. Further, as shown in Figure 1B, the weight measurement device 20 has approximately the same footprint as the basket 52 of the portafilter 50.

Thus, any ground coffee that is dispensed from the output portion 16 that does not make it into the portafilter basket 52 (i.e., spilled coffee) will not fall onto the portafilter platform 40. This feature prevents the spilled coffee from being weighed, which provides a more accurate measurement of the ground coffee within the portafilter basket 52.

Figure 4 illustrates a block diagram of the coffee grinding apparatus 10 shown in Figures 1 A-B, 2A-B, and 3A-B. As shown, the coffee grinding apparatus 10 includes a controller 18 that is operatively connected to the weight measurement device 20, operatively connected to inputs 25 (e.g., buttons 28) and outputs 27 (e.g., display 26) of the user interface 24 (and/or other user interfaces) via one or more communications interfaces or links 19, and operatively connected the coffee grinding mechanism 30 via a communications link 21. More specifically, the controller 18 is operative to receive analog or digital signals from the weight measurement device 20 that correspond to weight measurements of the weight measurement device. The controller 18 is also operative to control the coffee grinding mechanism 30 (e.g., to start and stop a motor thereof) by sending signals thereto. Further, the controller 18 is operative to receive signals from the buttons 28, 47, and 56 (or other available inputs) of the user interfaces and to control the display 26 (or other displays or outputs) of the user interfaces. As can be appreciated, the controller 18 may include features of microcontrollers known in the art. For example, the controller 18 may include one or more processor cores, one or more types of memory, and input/output peripherals. The controller 18 may be application specific or a generally available controller, provided that it is capable of performing the functionality discussed herein.

The communications links 19 and 21 may be any suitable wired or wireless communications links. The communications links 19 and 21 may enable the controller 18 to communicate with a variety of input and output devices, including one or more displays, one or more speakers, one or more buttons or keys, and the like. Further, the controller 18 may be operative to connect to or "pair" with one or several user interfaces simultaneously using any suitable communications technologies.

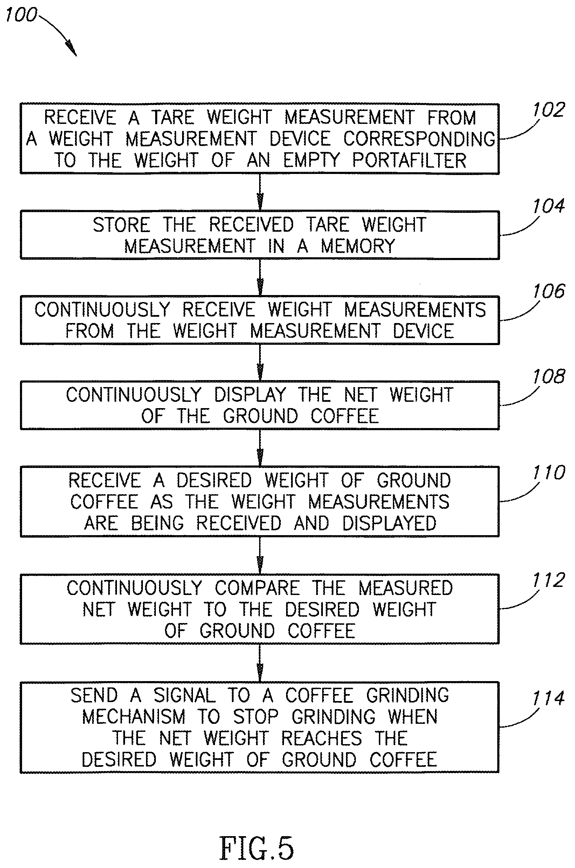

Figure 5 illustrates a flow chart of a method 100 of operation for the coffee grinding apparatus 10 shown in Figures 1 A-B, 2A-B, and 3A-B. As described below, the method 100 may be performed using the coffee grinding apparatus 10 to consistently dispense a precise weight of ground coffee directly into a portafilter so that high quality espresso shots and espresso-based beverages may be prepared. Initially, a user may position the empty portafilter 50 on the portafilter platform 40 of the coffee grinding apparatus 10. Then, using inputs of a user interface (e.g., the inputs 25 of the user interface 24 shown in Figure 4), the user may instruct the controller 18 to obtain a tare weight measurement. For example, the user may be able to select a "Measure Tare Weight" option from a menu of options provided on a display. The controller 18 may then receive the tare weight measurement from the weight measurement device 20 that corresponds to the weight of the empty portafilter 50 (step 102). The tare weight may be stored in a suitable memory of the controller 18 (step 104) so that the controller can determine the net weight of ground coffee disposed within the basket 52 of the portafilter 50.

Once the tare weight has been measured and stored, the controller 18 may thereafter continuously receive weight measurements from the weight measurement device 20 (step 106). Using the stored tare weight, the controller may then display the net weight of ground coffee in the basket 52 of the portafilter 50 by subtracting the tare weight from the gross weight measurements received from the weight measurement device 20 (step 108). Thus, the user may view the precise weight of ground coffee in the portafilter basket 52 substantially in "real-time" as the ground coffee is dispensed into the portafilter basket. The weight of ground coffee may be displayed in any suitable unit of measurement (e.g., grams, ounces, or the like). In some embodiments, the unit of measurement may be selectable by a user.

The coffee grinding apparatus 10 may also include a feature to automatically stop the coffee grinding mechanism 30 when a predetermined weight of coffee has been deposited into the portafilter basket 52. Using the inputs of a user interface, the user may enter a desired weight of ground coffee to be used to fill the portafilter 50. The desired weight may be entered using any suitable unit of measurement (e.g., grams, ounces, or the like). The desired weight may be received and stored in a memory of the controller 18 (step 110), and may also be displayed on one or more outputs of a user interface (e.g., the outputs 27 of the user interface 24).

The coffee grinding apparatus 10 may be operative to receive and store multiple "desired weights" of ground coffee that are modifiable and selectable by the user. This feature may be beneficial for situations when different amounts of ground coffee are to be dispensed using the coffee grinding apparatus 10, or when a user is "experimenting" to determine an optimum desired weight of ground coffee. For example, each user of the coffee grinding apparatus 10 may have different desired weights. As another example, different weights of ground coffee may be preferred dependent on the type or amount of beverage being prepared.

The controller 18 may then continuously compare the measured net weight of ground coffee to the desired weight of ground coffee entered and/or selected by the user as the coffee grinding mechanism 30 of the coffee grinding apparatus 10 fills the portafilter basket 52 with ground coffee (step 112). Once the net weight of ground coffee has reached the desired weight, the controller 18 may send a signal to stop the operation of the coffee grinding mechanism 30 (step 114). In addition, an indication that the desired weight of coffee has been reached may be provided to the user (e.g., via the outputs 27 the user interface 24). As can be appreciated, depending on the specific design of the coffee grinding mechanism 30 and the output portion 16 of the coffee grinding apparatus 10, ground coffee may continue to be dispensed for a short period of time after the coffee grinding mechanism 30 has stopped operating. In this case, the controller 18 may signal the coffee grinding mechanism 30 to stop operating just before the net weight reaches the desired weight so that once the coffee grinding mechanism has stopped, the net weight of ground coffee equals the desired weight.

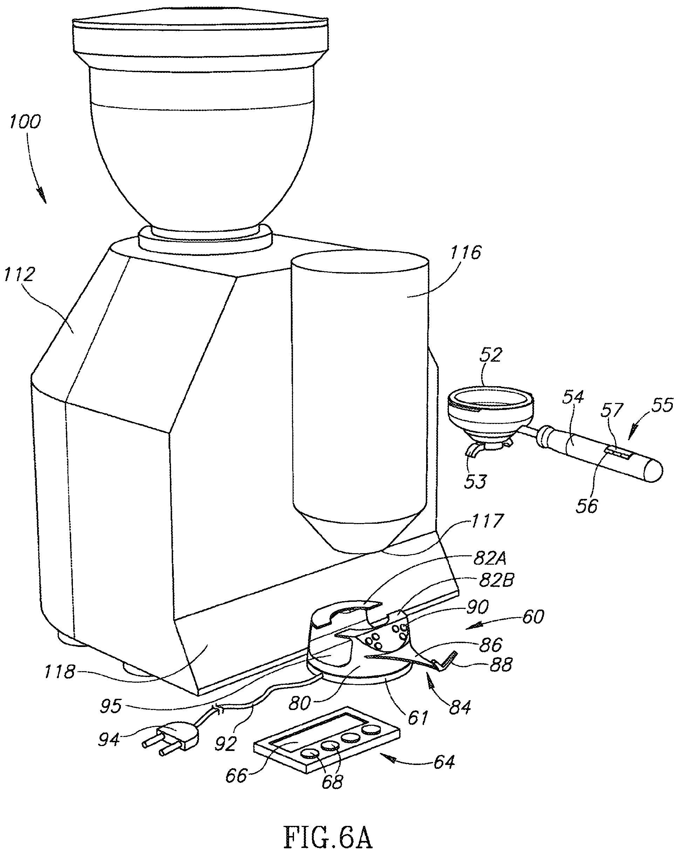

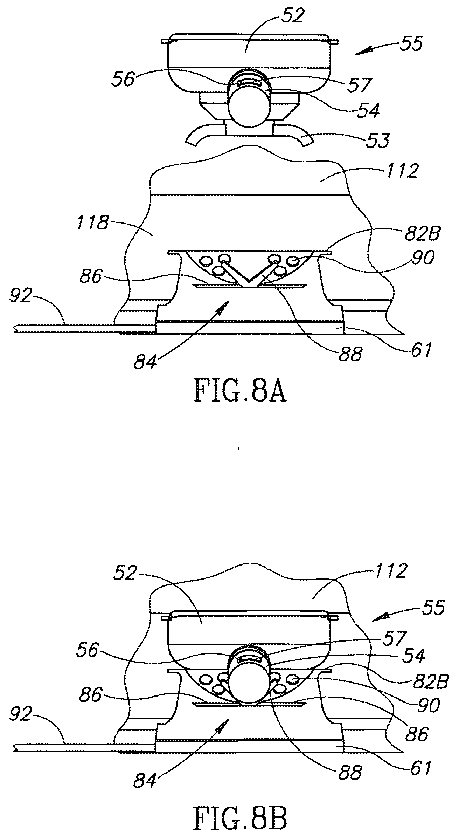

Figures 6A-B, 7A-B, and 8A-B illustrate a ground coffee measurement apparatus 60 in accordance with another embodiment of the disclosure. The measurement apparatus 60 is similar to the weight measurement device 20 of the coffee grinding apparatus 10 described above in many respects. Therefore, many of the features described above are also applicable to the measurement apparatus 60. The measurement apparatus 60 includes a base portion 61 that has a portafilter platform 80 fixedly or removably disposed on a top surface thereof. The base portion 10 includes a weight measurement device operative to measure the weight of the portafilter platform 80 and any objects resting on the portafilter platform.

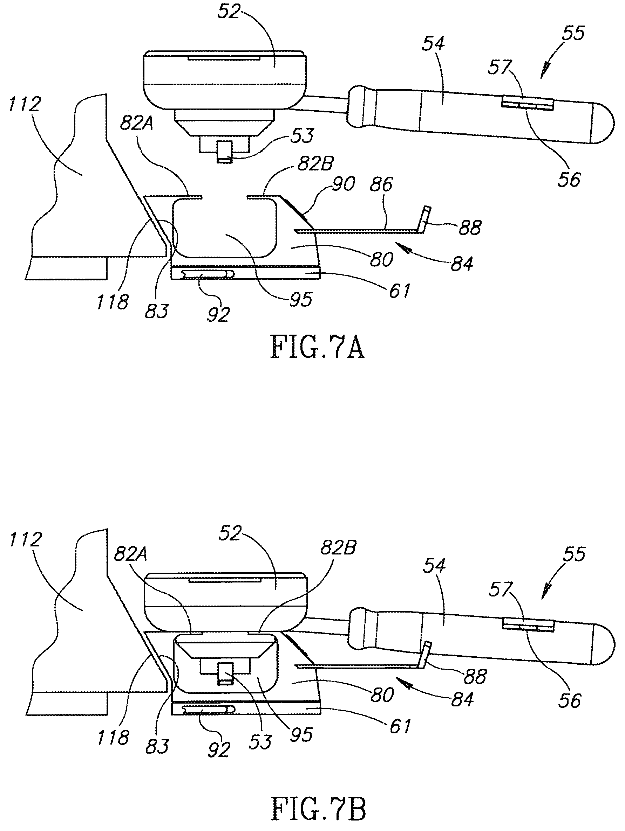

The portafilter platform 80 includes a rear raised basket support portion 82A and a front raised basket support portion 82B for supporting the basket 52 of the portafilter 50, and a handle support portion 84 for supporting the handle 54 of the portafilter. The raised basket support portions 82A and 82B together form a hollow interior region 95 (see Figures 7A and 7B) for receiving the spout portion 53 of the portafilter 50. The handle support portion 84 comprises an elongated beam portion 86 and a handle receiving portion 88. Like the portafilter platform 40 of the coffee grinding apparatus 10 described above, the portafilter platform 80 is configured to maintain the portafilter basket 52 at a horizontal orientation to provide "hands-free" operation for a user.

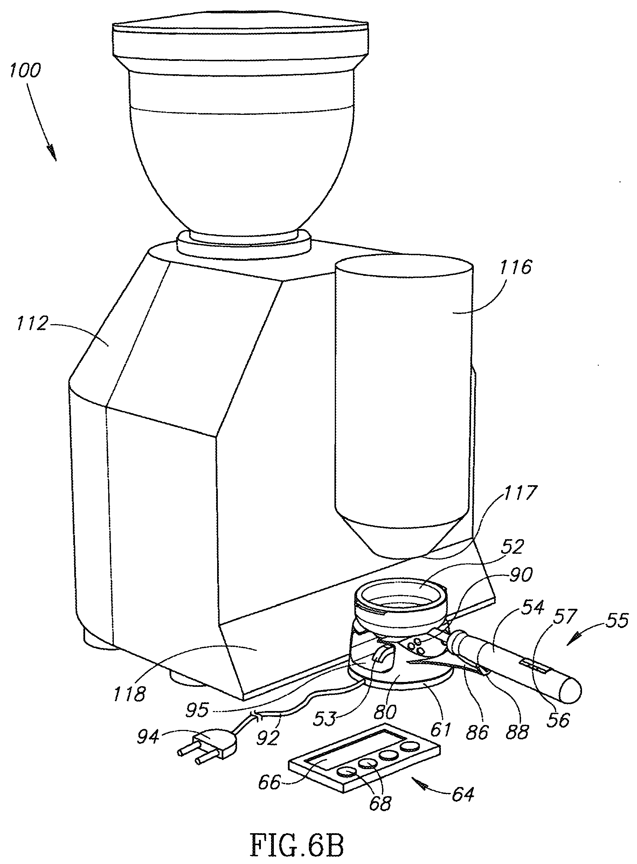

As shown in Figure 6A, a user may position the measurement apparatus 60 below an opening 117 of an output portion 116 of a conventional coffee grinding apparatus 100. As shown best in Figures 7A and 7B, the rear raised basket support portion 82B includes an angled outer surface 83 which allows the measurement apparatus 60 to be placed relatively close to an angled front portion 118 of the base structure 112 of the coffee grinding apparatus 100. As shown best in Figure 6B, this feature permits the portafilter basket 52 to be placed directly below the outlet 117 of the output portion 116 of the coffee grinding apparatus 100. Once the measurement apparatus 60 is positioned in front of the coffee grinding apparatus 100 with the portafilter platform 80 directly below the outlet 117 of the output portion, the user may then place the portafilter 50 on the portafilter platform 80 (see Figure 6B), and operate the coffee grinding apparatus to fill the portafilter basket 52 to a desired weight.

The measurement apparatus 60 also includes one or more user interfaces. For example, the measurement apparatus 60 includes a user interface 64 that includes a plurality of buttons 68 and a display 66. Like the user interfaces described above, the user interface 64 may include a variety of input and output devices in addition to or instead of the buttons 68 and the display 66. Similar to embodiments described above, the user interface 64 may be configured to communicate over a wired or wireless communications link with the measurement apparatus 60. In the embodiment shown, the user interface 64 is configured to be placed on a counter space near the measurement apparatus 60. In other embodiments, one or more user interface components may be disposed on the measurement apparatus 60 itself (e.g., buttons 90), or may be configured for placement in other suitable locations. Further, like the embodiments described above, the measurement apparatus 60 may be configured to communicate with the user interface 55 that is disposed on the handle 54 of the portafilter 50. It will be appreciated that one or more various types of wired or wireless user interfaces may be provided for use with the measurement apparatus 60.

Like the coffee grinding apparatus 10 described above, the measurement apparatus 60 may include a controller (not shown) operatively coupled to the weight measurement device 61 and one or more user interfaces (e.g., the user interfaces 55 and 64). In this regard, the measurement apparatus 60 is operative to measure and store a tare weight of the empty portafilter 50 so that the net weight of ground coffee may be measured and displayed on a display or other output of one or more user interfaces.

The measurement apparatus 60 may also be operative to receive and store one or more desired weights entered by a user via an input of a user interface or pre- programmed into a memory of the measurement apparatus. The desired weight may be modifiable and/or selectable by the user, and may be displayed on a display of one or more user interfaces. In operation, the user may operate the conventional coffee grinding apparatus 100 to dispense ground coffee directly into the basket 52 of the portafilter 50 positioned on the portafilter platform 80 (see Figure 6B). The net weight of ground coffee may be continuously measured and compared to the selected desired weight. Once the net weight of ground coffee in the portafilter basket 52 has reached the selected desired weight, one or more outputs (e.g., the display 66) may provide an indication signaling the user to stop the operation of the coffee grinding apparatus 100. For example, the display 66 and/or 57 may display a "Desired Weight Reached" message. Additionally or alternatively, the displays may provide a substantially real- time indication of status to the user (e.g., in the form of a progress bar or other graphical display). This feature may alert the user to be prepared to stop the coffee grinding apparatus 100 as the net weight approaches the desired weight. As another example, one or more of the user interfaces may include an audio generating device (e.g., a speaker) to alert the user when the net weight of ground coffee has reached or is approaching the desired weight.

As shown in Figures 6A and 6B, the measurement apparatus 60 may include a plug 94 and a power cord 92 so that the measurement apparatus may be connected to a power supply (e.g., an electrical wall outlet). In other embodiments, the measurement apparatus may be powered using other suitable means (e.g., batteries, solar cells, or any combinations thereof).

Once the desired weight of ground coffee has been dispensed into the portafilter basket 52, a user may then remove the portafilter 50 from the portafilter platform 80 and immediately attach the portafilter 50 to an espresso machine to prepare a shot of espresso. Since the user does not have to transfer the ground coffee between one or more temporary measurement containers, the likelihood of spilling any of the ground coffee is substantially reduced, which results in more consistent espresso shots. Further, since no additional time is required to transfer ground coffee between containers, there is less time for the temperature of the portafilter 50 to decay during the measurement process.
Figures 9A and 9B illustrate a variation of the coffee measurement apparatus 60 shown in Figures 6A-B, 7A-B, and 8A-B. The features of this variation are also applicable to the weight measurement device 20 of the coffee grinding apparatus shown in Figures 1 A-B, 2A-B and 3A-B. Therefore, it will be understood that the handle support portion of the portafilter platform of Figures 1A - 3B, may be adapted to be selectively adjustable. In the embodiment shown in Figures 9A and 9B, the height of the portafilter platform 80 may be selectively adjustable (as indicated by the arrow 120) to accommodate grinding devices that have output portions positioned at different heights. To provide this capability, the portafilter platform 80 is coupled to the base portion 61 by an adjustment portion 130. Although the adjustment portion 130 shown in Figure 9B is depicted by a plurality of telescoping cylindrical portions, any suitable means for selectively adjusting the height of the portafilter platform 80 relative to the outlet 117 of the output portion 116 may be provided. This feature allows a portafilter to be positioned directly below the outlet 117, thereby reducing the likelihood that ground coffee will "miss" the portafilter basket as it is being dispensed from a coffee grinding apparatus.

The embodiment shown in Figures 9A and 9B also allows for pivotal displacement of the handle support portion 84 about a pivot point 132. This feature is indicated by the arrow 121. Since the handle support portion may be selectively raised and lowered, portafilters having various sizes and handles may be easily accommodated. As can be appreciated, any suitable means may be provided for permitting selective adjustment of the height and/or length of the handle support portion 84 to permit use with a variety of types of portafilters.

As discussed herein, the embodiments of the present invention, wherein the handle support portion of the portafilter platform can be adapted to be selectively adjustable to permit use with a variety of types of portafilters, provide several advantages that are immediately recognizable. The present invention enables the dispensing of a precise mass of ground coffee, as measured by its weight, directly into the basket of a portafilter of an espresso machine. By measuring the mass of ground coffee by means of its weight, as opposed to measuring its volume or dispensing time, the present invention is much less susceptible to changing conditions such as temperature, humidity, the roast of the coffee beans, or the age of the coffee beans. Further, by providing a specialized portafilter platform configured to position a portafilter directly below an output portion of a coffee grinding apparatus, the time required for measuring ground coffee and the likelihood of spilling the coffee are greatly reduced. Those skilled in the art will readily recognize other advantages provided by the various embodiments of the present invention.

The foregoing described embodiments depict different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality.

While particular embodiments of the present invention have been shown and described, it will be obvious to those skilled in the art that, based upon the teachings herein, changes and modifications may be made without departing from this invention and its broader aspects and, therefore, the appended claims are to encompass within their scope all such changes and modifications as are within the scope of this invention. Furthermore, it is to be understood that the invention is solely defined by the appended claims. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations.

However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations).

Accordingly, the invention is not limited except as by the appended claims.

## Claims

1. A coffee grinding and weighing apparatus (10, 100) comprising:
a coffee grinder comprising:
a base structure (12, 112);
a coffee grinding mechanism (30) disposed within the base structure (12, 112) that is operative to grind whole coffee beans into ground coffee;
an output portion (16, 116) operatively associated with the coffee grinding mechanism (30) that includes an outlet (17, 117) configured to dispense ground coffee therefrom; and
the coffee grinding and weighting apparatus further comprising:
a weight measurement device (20) operably coupled to the base structure (12, 112) and positioned below the outlet (17, 117),
the weight measurement device (20) being configured to support a portafilter (50) having a basket (52) comprising a spout (53) depending from the basket (52), and an elongated handle (54); and
the weight measurement device (20, 60) comprising a portafilter platform (40, 80) having a basket support portion (42A, 42B, 82A, 82B) maintaining the basket (52) of the portafilter (50) directly below the outlet (17, 117) for filling the basket (52) with ground coffee, the basket support portion (42A, 42B, 82A, 82B) comprising a hollow interior region (41, 95) for receiving said spout (53) of the basket (52), and the portafilter platform (40, 80) further having a handle support portion (44, 84);
the coffee grinding and weighing apparatus being **characterized in that** the handle support portion (44, 84) can be selectively adjustable to permit use with a variety of types of portafilters.

2. The coffee grinding and weighing apparatus (10, 100) of claim 1, wherein the portafilter platform (40, 80) is operative to maintain the basket (52) of the portafilter (50) in a substantially horizontal orientation.

3. The coffee grinding and weighing apparatus (10, 100) of claim 1, further comprising a user interface (24, 55, 64) operatively coupled to the weight measurement device (20, 60), the user interface (24, 55, 64) including a display (26, 57, 66) configured to display a net weight of ground coffee measured by the weight measurement device (20, 60).

4. The coffee grinding and weighing apparatus (10, 100) of claim 3, wherein the user interface (24, 55, 64) is coupled to the weight measurement device (20, 60) via a wireless communications interface (19, 21).

5. The coffee grinding and weighing apparatus (10,100) of claim 1, further comprising a controller (18) operatively coupled to the weight measurement device (20, 60) and the coffee grinding mechanism (30), the controller (18) being operative to selectively control the operation of the coffee grinding mechanism (30) dependent on signals received from the weight measurement device (20, 60).

6. The coffee grinding and weighing apparatus (10, 100) of claim 5, wherein the controller (18) further comprises a memory, and wherein the coffee grinding and weighing apparatus further comprises a user interface (24, 55, 64) operatively coupled to the controller (18) that permits a user to enter a desired weight of ground coffee to be stored in the memory.

7. The coffee grinding and weighing apparatus of claim 1, further comprising:
a controller (18) operatively coupled to the weight measurement device (20, 60) and the coffee grinding mechanism (30), the controller (18) including a memory configured to store a tare weight of an empty portafilter (50); and
a user interface (24, 55, 64) operatively coupled to the controller (18), the user interface (24, 55, 64) being configured to receive input from a user corresponding to a desired weight of ground coffee and to provide the desired weight to the controller (18) to be stored in the memory, the user interface (24, 55, 64) further being operative to display a net weight of ground coffee measured by the weight measurement device (20, 60),
wherein the net weight is the gross weight measured by the weight measurement device (20, 60) less the stored tare weight.

8. The coffee grinding and weighing apparatus (10, 100) of claim 7,
wherein the controller (18) is operative to continuously measure the net weight of ground coffee as the coffee grinding mechanism (30) is operating, to compare the net weight to the desired weight, and to stop the operation of the coffee grinding mechanism (30) when the net weight reaches the desired weight.

9. The coffee grinding and weighing apparatus (10, 100) of claim 7, wherein the controller (18) is operative to store a plurality of desired weights simultaneously.

10. The coffee grinding and weighting apparatus (10, 100) of claim 1, wherein said handle support portion (44, 84) is selectively adjustable by pivoting.

11. The coffee grinding and weighting apparatus (10, 100) of claim 1, wherein said handle support portion (44, 84) is selectively adjustable by being raised and lowered.

12. The coffee grinding and weighting apparatus (10, 100) of claim 1, wherein said handle support portion (44, 84) is selectively adjustable in height and/or length.

## Patentansprüche

1. Kaffeemahl- und -wiegevorrichtung (10, 100), umfassend:
eine Kaffeemahlvorrichtung, die Folgendes umfasst:
eine Basiskonstruktion (12, 112);
einen Kaffeemahlmechanismus (30), der sich innerhalb der Basiskonstruktion (12, 112) befindet und im Betrieb dazu dient, ganze Kaffeebohnen zu gemahlenem Kaffee zu vermahlen;
einen Ausgabeabschnitt (16, 116), der dem Kaffeemahlmechanismus (30) betriebswirksam zugeordnet ist und einen Auslass (17, 117) beinhaltet, der konfiguriert ist, um daraus gemahlenen Kaffee abzugeben; und wobei die Kaffeemahl- und -wiegevorrichtung weiterhin umfasst:
eine Gewichtsmessvorrichtung (20), die mit der Basiskonstruktion (12, 112) betriebswirksam gekoppelt und unterhalb des Auslasses (17, 117) positioniert ist,
wobei die Gewichtsmessvorrichtung (20) konfiguriert ist, um einen Siebträger (50) abzustützen, der ein Sieb (52) mit einem vom Sieb (52) herabhängenden Ausgießer (53) sowie einen länglichen Handgriff (54) umfasst; und wobei
die Gewichtsmessvorrichtung (20, 60) eine Siebträgerplattform (40, 80) mit einem Siebträgerabschnitt (42A, 42B, 82A, 82B) umfasst, um das Sieb (52) des Siebträgers (50) direkt unterhalb des Auslasses (17, 117) zum Befüllen des Siebs (52) mit gemahlenem Kaffee zu halten, wobei der Siebträgerabschnitt (42A, 42B, 82A, 82B) einen hohlen inneren Bereich (41, 95) umfasst, um den Ausgießer (53) des Siebs (52) aufzunehmen, und wobei die Siebträgerplattform (40, 80) weiterhin einen Handgriffträgerabschnitt (44, 84) aufweist;
wobei die Kaffeemahl- und -wiegevorrichtung **dadurch gekennzeichnet ist, dass** der Handgriffträgerabschnitt (44, 84) wahlweise einstellbar ist, um die Verwendung unterschiedlicher Siebträgerausführungen zuzulassen.

2. Kaffeemahl- und -wiegevorrichtung (10, 100) nach Anspruch 1, bei der die Siebträgerplattform (40, 80) wirksam ist, um das Sieb (52) des Siebträgers (50) in einer im Wesentlichen horizontalen Orientierung zu halten.

3. Kaffeemahl- und -wiegevorrichtung (10, 100) nach Anspruch 1, die weiterhin eine Benutzeroberfläche (24, 55, 64) umfasst, die mit der Gewichtsmessvorrichtung (20, 60) betriebswirksam gekoppelt ist, wobei die Benutzeroberfläche (24, 55, 64) ein Display (26, 57, 66) beinhaltet, das konfiguriert ist, um ein Nettogewicht von durch die Gewichtsmessvorrichtung (20, 60) gemessenem gemahlenen Kaffee anzuzeigen.

4. Kaffeemahl- und -wiegevorrichtung (10, 100) nach Anspruch 3, bei der die Benutzeroberfläche (24, 55, 64) über eine drahtlose Kommunikationsschnittstelle (19, 21) mit der Gewichtsmessvorrichtung (20, 60) gekoppelt ist.

5. Kaffeemahl- und -wiegevorrichtung (10, 100) nach Anspruch 1, die weiterhin einen mit der Gewichtsmessvorrichtung (20, 60) und dem Kaffeemahlmechanismus (30) betriebswirksam gekoppelten Controller (18) umfasst, wobei der Controller (18) dazu dient, den Betrieb des Kaffeemahlmechanismus (30) abhängig von von der Gewichtsmessvorrichtung (20, 60) erhaltenen Signalen wahlweise zu kontrollieren.

6. Kaffeemahl- und -wiegevorrichtung (10, 100) nach Anspruch 5, bei der der Controller (18) weiterhin einen Speicher umfasst, und wobei die Kaffeemahl- und -wiegevorrichtung weiterhin eine Benutzeroberfläche (24, 55, 64) umfasst, die mit dem Controller (18) betriebswirksam gekoppelt ist, um es einem Benutzer zu ermöglichen, ein gewünschtes Gewicht von gemahlenem Kaffee im Speicher zu speichern.

7. Kaffeemahl- und -wiegevorrichtung nach Anspruch 1, die weiterhin umfasst: einen Controller (18), der mit der Gewichtsmessvorrichtung (20, 60) und dem Kaffeemahlmechanismus (30) betriebswirksam gekoppelt ist, wobei der Controller (18) einen Speicher beinhaltet, der konfiguriert ist, um ein Taragewicht eines leeren Siebträgers (50) zu speichern; und eine Benutzeroberfläche (24, 55, 64), die mit dem Controller (18) betriebswirksam gekoppelt ist, wobei die Benutzeroberfläche (24, 55, 64) konfiguriert ist, um eine Eingabe von einem Benutzer, die einem gewünschten Gewicht gemahlenen Kaffees entspricht, zu empfangen und das gewünschte Gewicht dem Controller (18) zwecks Speicherung im Speicher zuzuleiten, wobei die Benutzeroberfläche (24, 55, 64) weiterhin dazu dient, ein Nettogewicht von gemahlenem Kaffee, wie von der Gewichtsmessvorrichtung (20, 60) gemessen, anzuzeigen, wobei das Nettogewicht das von der Gewichtsmessvorrichtung (20, 60) gemessene Bruttogewicht, abzüglich des gespeicherten Taragewichts, ist.

8. Kaffeemahl- und -wiegevorrichtung (10, 100) nach Anspruch 7, bei der der Controller (18) dazu dient, das Nettogewicht gemahlenen Kaffees bei in Betrieb befindlichem Kaffeemahlmechanismus (30) kontinuierlich zu messen, das Nettogewicht mit dem gewünschten Gewicht zu vergleichen und den Betrieb des Kaffeemahlmechanismus (30) zu stoppen, wenn das Nettogewicht das gewünschte Gewicht erreicht.

9. Kaffeemahl- und -wiegevorrichtung (10, 100) nach Anspruch 7, bei der der Controller (18) dazu dient, mehrere gewünschte Gewichte gleichzeitig zu speichern.

10. Kaffeemahl- und -wiegevorrichtung (10, 100) nach Anspruch 1, bei der der Handgriffträgerabschnitt (44, 84) durch Schwenken wahlweise einstellbar ist.

11. Kaffeemahl- und -wiegevorrichtung (10, 100) nach Anspruch 1, bei der der Handgriffträgerabschnitt (44, 84) durch Anheben und Absenken wahlweise einstellbar ist.

12. Kaffeemahl- und -wiegevorrichtung (10, 100) nach Anspruch 1, bei der der Handgriffträgerabschnitt (44, 84) in der Höhe und/oder Länge wahlweise einstellbar ist.

## Revendications

1. Appareil de mouture et de pesage de café (10, 100), comprenant :
un moulin à café comprenant :
une structure de base (12, 112) ;
un mécanisme de mouture de café (30) disposé à l'intérieur de la structure de base (12, 112) et qui peut être utilisé pour moudre des grains de café entiers en café moulu ;
une portion de sortie (16, 116) associée de manière opérationnelle au mécanisme de mouture de café (30) et qui inclut un orifice de sortie (17, 117) configuré pour délivrer du café moulu depuis celui-ci ; et
l'appareil de mouture et de pesage de café comprenant en outre :
un dispositif de mesure du poids (20) couplé de manière opérationnelle à la structure de base (12, 112) et positionné au-dessous de l'orifice de sortie (17, 117),
le dispositif de mesure du poids (20) étant configuré pour supporter un porte-filtre (50) muni d'un panier (52) comprenant un bec verseur (53) dépendant du panier (52) et une poignée allongée (54) ; et
le dispositif de mesure du poids (20, 60) comprenant une plate-forme porte-filtre (40, 80) dotée d'une portion support de panier (42A, 42B, 82A, 82B) qui maintient le panier (52) du porte-filtre (50) directement au-dessous de l'orifice de sortie (17, 117) pour remplir le panier (52) avec du café moulu, la portion support de panier (42A, 42B, 82A, 82B) comprenant une région intérieure creuse (41, 95) destinée à accueillir ledit bec verseur (53) du panier (52) et la plate-forme porte-filtre (40, 80) possédant en outre une portion support de poignée (44, 84) ;
l'appareil de mouture et de pesage de café étant **caractérisé en ce que** la portion support de poignée (44, 84) peut être réglée de manière sélective pour permettre une utilisation avec divers types de porte-filtres.

2. Appareil de mouture et de pesage de café (10, 100) selon la revendication 1, dans lequel la plate-forme porte-filtre (40, 80) peut être utilisée pour maintenir le panier (52) du porte-filtre (50) dans une position sensiblement horizontale.

3. Appareil de mouture et de pesage de café (10, 100) selon la revendication 1, comprenant en outre une interface utilisateur (24, 55, 64) connectée de manière opérationnelle au dispositif de mesure du poids (20, 60), l'interface utilisateur (24, 55, 64) comprenant un afficheur (26, 57, 66) configuré pour afficher un poids net du café moulu mesuré par le dispositif de mesure du poids (20, 60).

4. Appareil de mouture et de pesage de café (10, 100) selon la revendication 3, dans lequel l'interface utilisateur (24, 55, 64) est connectée au dispositif de mesure du poids (20, 60) par le biais d'une interface de communication sans fil (19, 21).

5. Appareil de mouture et de pesage de café (10, 100) selon la revendication 1, comprenant en outre un contrôleur (18) connecté de manière opérationnelle au dispositif de mesure du poids (20, 60) et au mécanisme de mouture de café (30), le contrôleur (18) pouvant être utilisé pour commander de manière sélective le fonctionnement du mécanisme de mouture de café (30) en fonction des signaux reçus de la part du dispositif de mesure du poids (20, 60).

6. Appareil de mouture et de pesage de café (10, 100) selon la revendication 5, dans lequel le contrôleur (18) comprend en outre une mémoire et avec lequel l'appareil de mouture et de pesage de café comprend en outre une interface utilisateur (24, 55, 64) connectée de manière opérationnelle au contrôleur (18) qui permet à un utilisateur de saisir un poids souhaité de café moulu à stocker dans la mémoire.

7. Appareil de mouture et de pesage de café selon la revendication 1, comprenant en outre:
un contrôleur (18) connecté de manière opérationnelle au dispositif de mesure du poids (20, 60) et au mécanisme de mouture de café (30), le contrôleur (18) comprenant une mémoire configurée pour stocker un poids de tare d'un porte-filtre (50) vide ; et
une interface utilisateur (24, 55, 64) connectée de manière opérationnelle au contrôleur (18), l'interface utilisateur (24, 55, 64) étant configurée pour recevoir de la part d'un utilisateur une entrée correspondant à un poids souhaité de café moulu et pour fournir le poids souhaité au contrôleur (18) en vue de son stockage dans la mémoire, l'interface utilisateur (24, 55, 64) pouvant en outre être utilisée pour afficher un poids net du café moulu mesuré par le dispositif de mesure du poids (20, 60), le poids net étant le poids brut mesuré par le dispositif de mesure du poids (20, 60) moins le poids de tare stocké.

8. Appareil de mouture et de pesage de café (10, 100) selon la revendication 7, dans lequel le contrôleur (18) peut être utilisé pour mesurer en continu le poids net du café moulu à mesure que le mécanisme de mouture de café (30) fonctionne, pour comparer le poids net au poids souhaité et pour arrêter le fonctionnement du mécanisme de mouture de café (30) lorsque le poids net atteint le poids souhaité.

9. Appareil de mouture et de pesage de café (10, 100) selon la revendication 7, dans lequel le contrôleur (18) peut être utilisé pour stocker simultanément une pluralité de poids souhaités.

10. Appareil de mouture et de pesage de café (10, 100) selon la revendication 1, dans lequel ladite portion support de poignée (44, 84) est réglable de manière sélective par pivotement.

11. Appareil de mouture et de pesage de café (10, 100) selon la revendication 1, dans lequel ladite portion support de poignée (44, 84) est réglable de manière sélective en la montant et en la descendant.

12. Appareil de mouture et de pesage de café (10, 100) selon la revendication 1, dans lequel ladite portion support de poignée (44, 84) est réglable de manière sélective en hauteur et/ou en longueur.
